(19) Europäisches Patentamt
European Patent Office
Office européen des brevets

(11) EP 2 214 420 A1

(12) EUROPEAN PATENT APPLICATION
published in accordance with Art. 153(4) EPC

(43) Date of publication:
04.08.2010 Bulletin 2010/31

(51) Int Cl.:
H04R 3/00 (2006.01)     H04R 1/40 (2006.01)

(21) Application number: 08834939.4

(86) International application number:
PCT/JP2008/067770

(22) Date of filing: 30.09.2008

(87) International publication number:
WO 2009/044749 (09.04.2009 Gazette 2009/15)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 01.10.2007 JP 2007257419

(71) Applicant: Yamaha Corporation
Hamamatsu-shi, Shizuoka 430-8650 (JP)

(72) Inventors:
• UKAI, Satoshi
  Hamamatsu-shi, Shizuoka-ken (JP)
• SUZUKI, Satoshi
  Hamamatsu-shi, Shizuoka-ken (JP)

(74) Representative: Wagner, Karl H.
Wagner & Geyer Partnerschaft
Patent- und Rechtsanwälte
Gewürzmühlstrasse 5
80538 München (DE)

(54) SOUND EMISSION AND COLLECTION DEVICE

(57) A sound emitting and collecting apparatus that can precisely detect the talker direction based on a collected sound signal even when a sound is emitted from a loudspeaker is provided. Microphone units MU1 to MU8 collect a sound in sound collecting areas MA1 to MA8 formed so as to have rotational symmetry with the placement position of loudspeakers SP1 and SP2 as the center and generates composite signals SA1 to SA8 (hereinafter, SAk). Logarithm calculation sections L1 to L8 calculate logarithm values $P_k$ of power level of the composite signals SAk. An amplification section 11 calculates a power level average value AV from the logarithm values $P_k$ of power levels and a subtraction section subtracts the power level average value AV from the logarithm values $P_k$ of power level to generate differential signal levels $D_k$. A maximum value detection section 12 compares differential signal levels $D_k$ and detects the maximum value. A control section 20 detects the direction of the sound collecting area corresponding to the differential signal level $D_{kM}$ indicating the maximum value as the talker direction.

FIG. 2

## Description

Technical Field

This invention relates to a sound emitting and collecting apparatus for detecting the talker direction based on a collected sound signal.

Background Art

Generally, a sound emitting and collecting apparatus for detecting the sound collecting direction in which the output of the microphone array becomes the maximum as the arrival direction of a sound source by changing the directivity of a microphone array made up of a plurality of microphones.

However, the sound emitting and collecting apparatus as described above involves a problem in that when a loudspeaker produces a sound, the produced sound is collected in the microphone, and the sound collection direction (azimuth) of the microphone positioned in the proximity of the loudspeaker is erroneously detected as the sound arrival direction.

Patent Document 1 discloses a sound emitting and collecting apparatus, when detecting a receiving signal from a communication destination, for preventing the directivity of a microphone array from aiming at a sound collecting area positioned in the proximity of the loudspeaker emitting a sound based on the receiving signal.

Patent Document 1: JP-A-11-18192

Disclosure of the Invention

Problems to be Solved by the Invention

However, the sound emitting and collecting apparatus shown in Patent Document 1 involves a problem in that when a loudspeaker emits a sound based on the receiving signal (produced sound signal), the sound emitting and collecting apparatus cannot precisely detect the talker direction

It is therefore an object of the invention to provide a sound emitting and collecting apparatus that can precisely detect the talker direction based on a collected sound signal even when a sound is emitted from a loudspeaker. Means for Solving the Problems

A sound emitting and collecting apparatus of the invention includes a sound emitting section, a plurality of sound collecting sections, a difference level calculation section, and a talker direction detection section, and emits a sound based on an emitting sound signal, collects a sound from the surroundings of the apparatus to generate a collected sound signal, and detects the talker direction based on the collected sound signal. The sound emitting section outputs an emitting sound based on the emitting sound signal. The plurality of sound collecting sections form sound collecting areas which are set so that the emitting sound from the sound emitting section is collected by all of the sound collecting sections equally and collect a sound from the sound collecting areas to generate a collected sound signal. The difference level calculation section calculates logarithm values of power of the collected sound signals from the plurality of sound collecting sections and an average value of the logarithm values of power of the collected sound signals and subtracts the average value from the logarithm value of power of each of the collected sound signals to generate difference level signals corresponding to the sound collecting sections respectively. The talker direction detection section compares level values of the difference level signals to detect the maximum value among the level values, and detects a direction of the sound collecting section corresponding to the difference level signal indicating the maximum value as a talker direction.

In this configuration, a sound is collected by the sound collecting areas which are set so that the sound emitted from the sound emitting section is collected by all of the sound collecting sections equally, to generate the collected sound signals. The logarithm values of power of the collected sound signals and the average value of the logarithm values of power of the collected sound signals are calculated. The average value is subtracted from the logarithm values of power of the collected sound signals to generate the difference level signals. Further, the sound collecting direction of the sound collection section corresponding to the difference level signal indicating the maximum value is detected as the talker direction. Accordingly, even when the sound emitting section emits a sound, the talker direction can be detected based on the sound collecting area indicating the maximum value by comparing the difference signals.

Preferably, the talker direction detection section presets a talker sound detection threshold value for the level value of the difference level signal. When the maximum value becomes larger than the talker sound detection threshold value, the talker direction detection section detects the direction of the sound collecting section corresponding to the difference level signal indicating the maximum value as the talker direction.

Preferably, the difference level calculation section calculates the logarithm values of power of the collected sound signals and the average value of the logarithm values of power of the collected sound signals using only a low frequency component of the collected sound signal.

Accordingly, the talker direction can be detected using the low frequency component much containing the frequency component of a voice of a human being, of the frequency components of the audible range contained in the collected sound signal.

Advantages of the Invention

According to the invention, in a sound emitting and collecting apparatus with a loudspeaker and a plurality of microphones installed in one case, if the loudspeaker emits a sound, the talker direction can be precisely detected based on the collected sound signal.

Brief Description of the Drawings

FIG. 1 is a drawing to schematically show the positional relationship among loudspeakers and microphone units and sound collecting areas on a top view of a sound emitting and collecting apparatus according to one embodiment of the invention.

FIG. 2 is a drawing to schematically show a flow of talker direction detection in the sound emitting and collecting apparatus shown in FIG. 1.
FIG. 3 (A) is a drawing to show change of the level of an emitting sound signal S and level $W_k$ of vocalized sound (talker sound) in each sound collecting area,
FIG.3 (B) is a drawing to show change of a logarithm value $P_k$ of a power level and a power level average value AV, and FIG.3 (C) is a drawing to schematically show a threshold value Th and a differential signal level $D_k$.
Description of Reference Numerals

| | |
|---|---|
| 1 | Sound emitting and collecting apparatus |
| 10 | Adder |
| 11 | Amplification section |
| 12 | Maximum value detection section |
| 14 | Comparator |
| 20 | Control section |
| AV | Power level average value |
| $D_K$, $D_{KM}$ | Differential signal level |
| F1-F32 | Linear filter |
| L1-L8 | Logarithm calculation section |
| MA1-MA8 | Sound collecting area |
| MU1-MU8 | Microphone unit |
| $P_K$ | Logarithm value of power level |
| S | Emitting sound signal |
| SAk | Composite signal |
| SBk | Power signal |
| SP1, SP2 | Loudspeaker |
| SR1-SR8 | Subtracter |
| SU1-SU8 | Adder |

Best Mode for Carrying out the Invention

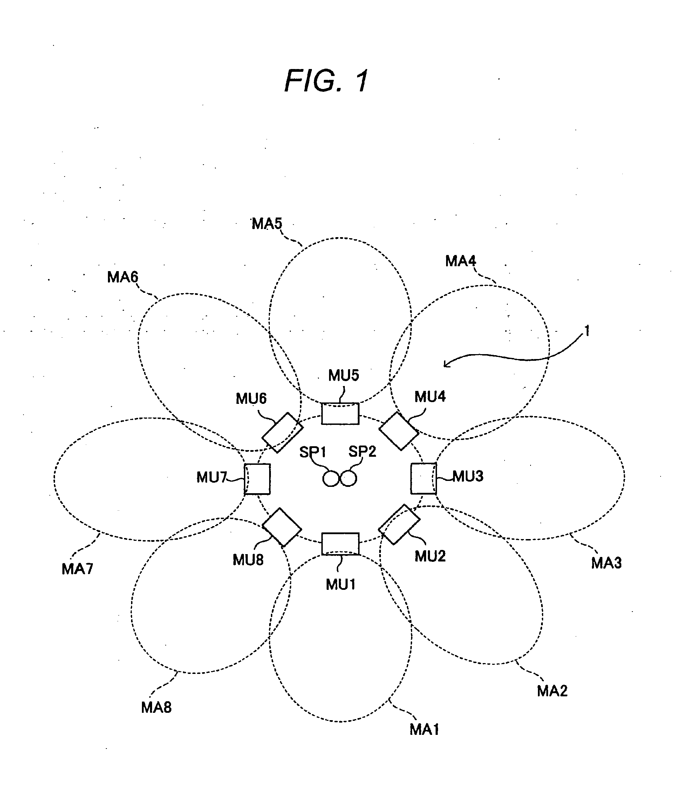

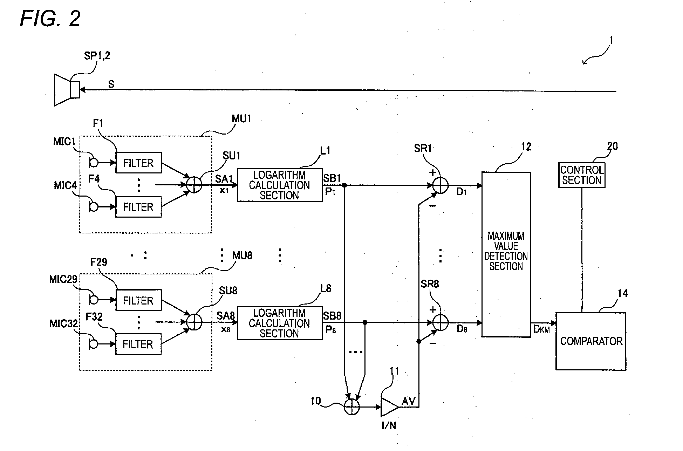

A sound emitting and collecting apparatus 1 according to one embodiment of the invention will be discussed below with reference to the accompanying drawings:
The sound emitting and collecting apparatus 1 has a tubular case (not shown) which becomes shaped like a circle on a top view. FIG. 1 is a drawing to schematically show the positional relationship among loudspeakers SP1 and SP2 and microphone units MU1 to MU8 of the sound emitting and collecting apparatus 1 and sound collecting areas MA1 to MA8 formed on the periphery of the sound emitting and collecting apparatus 1 on a top view. FIG. 2 is a drawing to schematically show a flow of talker direction detection in the sound emitting and collecting apparatus 1.
As shown in FIGs. 1 and 2, the sound emitting and collecting apparatus 1 includes microphone units MU1 to mum, logarithm calculation sections L1 to L8, an adder 10, an amplification section 11, subtracters SR1 to SR8, a maximum value detection section 12, a comparator 14, a control section 20, loudspeakers SP1 and SP2, and an echo canceller (not shown), etc.

The loudspeakers SP1 and SP2 are provided in the case roughly in the center of the sound emitting and collecting apparatus 1 on the top view and emit a sound based on an emitting sound signal S with upper face side and lower face side areas of the case as sound emitting areas.

The microphone units MU1 to MU8 are placed so as to have 45-degree rotational symmetry with the placement position of the loudspeakers SP1 and SP2 as the center on the top view. Here, "the 45-degree rotational symmetry" means that when one pattern is rotated 45 degrees with the rotational symmetry center point as the reference, it overlaps the original pattern. The 45-degree rotational symmetry can also be represented as 8-fold rotational symmetry.

Sound collecting directivity is set in each of the microphone units MU1 to MU8 so as to collect a sound in each of sound collecting areas MA1 to MA8 respectively. The sound collecting areas MA1 to MA8 are formed so as to have 8-fold rotational symmetry with the placement position of the loudspeakers SP1 and SP2 as the center.

In such placement of the microphone units, echo sound transmission path lengths until an emitting sound from the loudspeaker SP1, SP2 is collected in the respective microphone units MU1 to MU8 through the sound collecting areas MA1 to MA8 become roughly the same in all microphone units MU1 to MU8. Accordingly, the echo sound level in which the microphone unit MU1 to MU8 collects the sound emitted from the loudspeaker SP1, SP2 can be made uniform.

The configuration of each of the microphone units MU1 to MU8 will be discussed below by taking the microphone unit MU1 as an example. The microphone units MU1 to MU8 differ only in sound collecting area and have the same configuration.

The microphone unit MU1 has microphones MIC1 to MIC4, linear filters F1 to F4, and an adder SU1.

The microphones MIC1 to MIC4 are placed in a row along a predetermined reference plane and have each predetermined sound collecting directivity.

The linear filters F1 to F4 perform delay processing for collected sound signals collected in the microphones MIC1 to MIC4. The adder SU1 performs combining processing of the collected sound signals subjected to the delay processing in the linear filters F1 to F4. Such a configuration and processing are used, thereby setting sound collecting directivity realizing the sound collecting area MA1 as the whole microphone unit MU1.

The adder SU1 outputs a composite signal SA1 resulting from the combining processing to the logarithm calculation section L1 (see FIG. 2).

The logarithm calculation sections L1 to L8 calculate a logarithm value (logarithm power) of a low frequency component contained in the composite signal SAk output from the microphone unit MU1 to MU8 according to expression (1). k is a subscript from 1 to 8 indicating the microphone units MU1 to MU8.

Generally, the frequency band of the audible range of a human being is from 20 Hz to 20000 Hz; the voice of the human being much contains a frequency band component of 400 Hz to 4000 Hz of a comparatively low frequency component of the audible range.

Then, in the sound emitting and collecting apparatus 1, for example, the logarithm value of signal power of the frequency band of 400 Hz to 4000 Hz of the low frequency component mentioned above is used in the logarithm calculation sections L1 to L8. Accordingly, the frequency component much contained in the voice of a human being can be used for talker direction detection. Thus, the talker direction can be detected more precisely.

## [Expression 1]

$$P_k = \log_{10}\left\{\frac{1}{T}\sum_{0 \le t < T} x_k^2(t)\right\} \qquad \ldots(1)$$

where $x_k$ indicates the signal level of the composite signal SAk (SA1 to SA8) and $P_k$ indicates the logarithm value of the signal level (power level) of a power signal SBk (SB1 to SB8) for the composite signal SAk. k is a subscript of 1 to 8 indicating which of the microphone units MU1 to MU8 outputs the composite signal. t indicates the time. T is set according to the sampling time length of the composite signal SAk.

The logarithm calculation sections L1 to L8 output each the logarithm vale $P_k$ of the power level calculated according to Expression (1) mentioned above (see FIG. 2).

The adder 10 and the amplification section 11 calculate power level average value AV from the logarithm value $P_k$ of the power level based on Expression (2). More specifically, the adder 10 calculates the sum of the logarithm values $P_k$ of the power levels and outputs the result to the amplification section 11. The amplification section 11 divides the sum of the power levels $P_k$ of the logarithm values by the number of composite signals SAk, N, (in the embodiment, N=8), thereby calculating the power level average value AV.

[Expression 2]

$$AV = \left\{ \frac{1}{N} \sum_{k=1}^{N} P_k \right\} \quad \cdots (2)$$

The subtracters SR1 to SR8 subtract each the power level average value AV from the logarithm value $P_k$ of the power level to generate a differential signal level $D_k$ (see the following Expression (3)).

[Expression 3]

$$D_k = P_k - AV \qquad \cdots (3)$$

Here, $D_k$ indicates the differential signal level.

The maximum value detection section 12 detects a differential signal level $D_{kM}$ indicating the maximum value from among the differential signal levels $D_k$ and outputs the detected differential signal level $D_{KM}$ to the comparator 14 (see FIG. 2).

The comparator 14 makes a comparison between a threshold value Th and the differential signal level $D_{kM}$ indicating the maximum value output from the maximum value detection section 12. If the differential signal level $D_{kM}$ is larger than the threshold value Th, the differential signal level $D_{kM}$ is output to the control section 20. The threshold value Th is a level at which it can be determined that the talker for the apparatus talks and the sound generated by the talk is collected, and is set from the differential signal level in a state that the collected sound level becomes as high as a predetermined level relative to the emitting sound level based on the level. On the other hand, if the differential signal level $D_{kM}$ becomes equal to or less than the threshold value Th, the comparator 14 does not output the differential signal level $D_{kM}$ to the control section 20. Accordingly, when the talker talks by a larger voice to some extent than the emitting sound in any of the sound collecting areas MA1 to MAB, the differential signal level $D_{kM}$ in the sound collecting area where the talker talks can be used for talker direction detection.

When the control section 20 accepts the differential signal level $D_{kM}$ from the comparator 14, the control section 20 outputs direction information associated with the microphone unit outputting the differential signal level $D_{kM}$ from among the microphone units MU1 to MU8 as talker direction information. The control section 20 maintains the detected talker position until the control section 20 newly accepts the differential signal level $D_{kM}$ exceeding the threshold value Th from the comparator 14.

Accordingly, if the loudspeaker SP1, SP2 emits a sound based on the emitting sound signal S, the talker direction can be precisely detected based on the composite signal SAk output from the microphone units MU1 to MU8.

In the sound emitting and collecting apparatus 1 according to the embodiment, the comparator 14 makes a comparison between the differential signal level $D_{kM}$ and the threshold value Th by way of example. However, the invention is not limited to this example. For example, it is also possible to output the differential signal level $D_{kM}$ indicating the maximum value directly to the control section 20 every predetermined time for detecting the talker direction instead of using the comparator 14.

As a detection method of the talker direction, it is also considered that a comparison is made between the signal level of the emitting sound signal S and signal levels $x_k$ of the composite signals SA1 to SA8, and the talker position is detected based on the difference signal therebetween. In this case, however, if an emitted sound does not exist, the value of the emitting sound signal S becomes 0. Therefore, if an attempt is made to perform catenation using the level of the emitting sound signal, "0," as the reference level, a large calculation error easily occurs and it is feared that a problem will occur in signal processing. Since the emitting sound signal and the collected sound signal are differ in noise characteristic, if both are simply compared, it is difficult to detect the talker direction with good accuracy; this is also a problem.

On the other hand, in the sound emitting and collecting apparatus 1, the power level average value AV of the logarithm value is subtracted from the logarithm value $P_k$ of the power level to calculate the differential signal level $D_k$, as shown in Expression (3). Thus, the differential signal level $D_k$ can be calculated without directly using the signal level of the emitting sound signal S for the calculation expression. Thus, the talker direction can be detected with good accuracy based only on the signal level $x_k$ of the composite signals SA1 to SA8. In Expression (3), using the logarithm value, the differential signal level $D_k$ can be calculated as the difference between the logarithm value $P_k$ of the power level and the power level average value AV. Thus, the threshold value Th can be set as a fixed value and there is also the advantage that the talker direction can be detected using the threshold value Th of the fixed value.

In the embodiment, the threshold value Th is fixed by way of example. However, the invention is not limited to this example. For example, it is also possible to previously store a plurality of threshold values in the comparator 14. In this case, the threshold value Th can be switched in response to the use environment of the sound emitting and collecting apparatus 1.

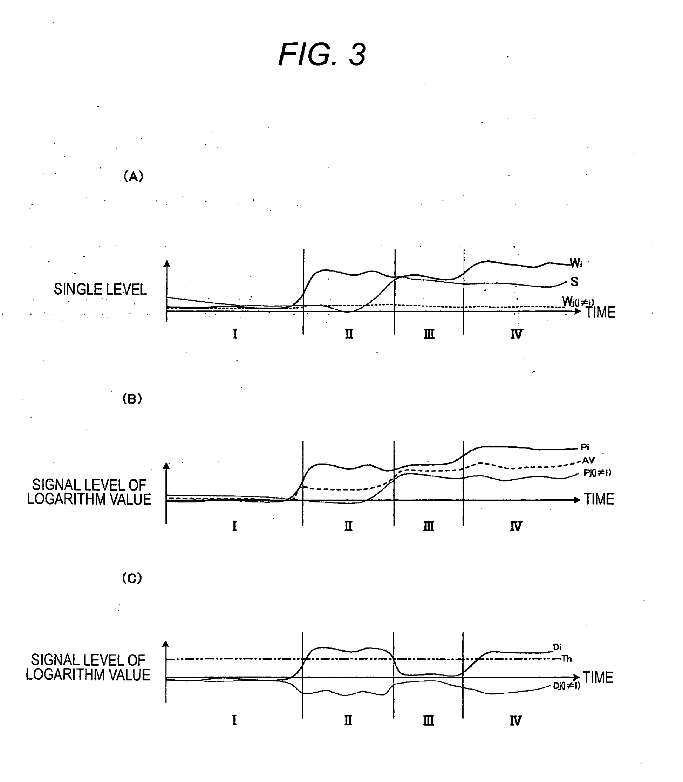

Next, a specific example of talker direction detection of the sound emitting and collecting apparatus 1 will be discussed with FIG. 3.

FIG. 3 (A) is a drawing to show change of the level of the emitting sound signal S and level $W_k$ of vocalized sound (talker sound) in each sound collecting area. FIG. 3 (B) is a drawing to show change of the logarithm value $P_k$ of the power level and the power level average value AV. FIG. 3 (C) is a drawing to schematically show the threshold value Th and the differential signal level $D_k$. In FIG. 3, subscript i indicates the sound collecting area where the logarithm value $P_k$ of the power level becomes the largest value among the sound collecting areas MA1 to MA8. In contrast, subscript j indicates any other sound collecting area than the subscript i. In FIG. 3, for $P_j$, only one output is shown for simplicity.

In a time zone I shown in FIG. 3, a state of a signal level when no sound is emitted from the loudspeaker SP1, SP2 and none of talkers in the sound collecting areas MA1 to MA8 talk is shown schematically. In this case, as shown in FIG. 3 (C), both differential signal levels $D_i$ and $D_j$ become smaller than the threshold value Th and thus the control section 20 does not set new talker direction.

In a time zone II shown in FIG. 3, a state of each signal level when a talker talks in one of the sound collecting areas MA1 to MA8 (the area corresponding to i) and no sound is emitted from the loudspeaker SP1, SP2 is shown schematically.

In this case, as shown in FIG. 3 (C), the differential signal level $D_i$ becomes larger than the threshold value Th and any other differential signal level $D_j$ becomes smaller than the threshold value Th. Thus, the control section 20 sets the talker direction to the direction of the microphone unit indicated by the subscript i.

In a time zone III shown in FIG. 3, a state of each signal level when a talker talks in one of the sound collecting areas MA1 to MA8 (the area corresponding to i) and a sound is emitted from the loudspeaker SP1, SP2 and further the talk sound level is roughly the same as the sound emitting level of an echo sound brought by the emitted sound is shown schematically. In this case, as shown in FIG. 3 (C), the differential signal level $D_i$ becomes smaller than the threshold value Th. Thus, the control section 20 does not update the talker direction. That is, it maintains the talker direction set at the point in time in the preceding time zone II.

In a time zone IV shown in FIG. 3, a state of each signal level when, although a sound is emitted from the loudspeaker SP1, SP2, a talker talks in one of the sound collecting areas MA1 to MA8 (the area corresponding to i) in a larger voice to some extent than the emitted sound from the loudspeaker SP1, SP2 is shown.

In this case, as shown in FIG. 3 (C), the differential signal level $D_i$ becomes larger than the threshold value Th, and any other differential signal level $D_j$ becomes smaller than the threshold value Th. Thus, the control section 20 sets the talker direction to the direction of the microphone unit indicated by the subscript i.

By performing such processing, the talker direction can be reliably detected regardless of the sound emitting state from the loudspeaker SP1, SP2. If it becomes impossible to detect the talker direction according to the emitted sound level from the loudspeaker, the immediately preceding talker direction is maintained, whereby the talker direction does not disappear or does not change at random and a direction having the highest talker direction possibility can be maintained without modification.

In the embodiment described above, the microphone units MU1 to MU8 is placed like an octagon so as to have 8-fold rotational symmetry with the loudspeakers SP1 and SP2 as the center. However, the invention is not limited to this embodiment. That is, the echo sound of the sound emitted from the loudspeaker may be reached in all microphone units equally; for example, if the sound collecting areas are formed so as to have rotational symmetry with the loudspeakers SP1 and SP2 as the center, the microphone units may be placed like an equilateral triangle. In this case, the sound collecting areas in which the microphone units collect a sound can be formed so as to have 3-fold rotational symmetry, so that similar advantages to those of the embodiment described above can be achieved.

In the embodiment described above, the sound collecting areas MA1 to MA8 are formed so as to have rotational symmetry with the loudspeakers SP1 and SP2 as the center by way of example. However, the invention is not limited to the example. For example, the echo sound of the sound emitted from the loudspeaker in a predetermined sampling time width becomes equal in all microphone units collecting the sound, it is also possible to make setting so as to switch ON/OFF of the microphone unit collecting a sound for each predetermined sampling time width or change the shape of each sound collecting area. In this case, similar advantages to those of the embodiment described above can also be provided.

If the sound producing characteristic (directivity) from the loudspeaker SP1, SP2 is variable, the sound collecting directivity of each microphone unit may be controlled so as to obtain the echo sounds at the same level in all microphone units in response to the change. That is, if the echo sound levels in all microphone units become the same, the mechanical positional relationship is not limited.

It is to be understood that the description of the embodiment is illustrative and not restrictive. The scope of the invention is indicated by Claims rather than the embodiment described above. Further, all changes that fall within meets and bounds of the Claims or equivalence of such meets and bound are intended to embraced by Claims.

This application is based on Japanese Patent Application (No. 2007-257419) filed on October 1, 2007, which is incorporated herein by reference.

**Claims**

1. A sound emitting and collecting apparatus comprising:

   a sound emitting section that outputs an emitting sound based on an emitting sound signal;
   a plurality of sound collecting sections that form sound collecting areas which are set so that the emitting sound from the sound emitting section is collected by all of the sound collecting sections equally, and collect a sound from the sound collecting areas to generate a collected sound signal;
   a difference level calculation section that calculates logarithm values of power of the collected sound signals from the plurality of sound collecting sections and an average value of the logarithm values of the power of the collected sound signals, and subtracts the average value from the logarithm value of power of each of the collected sound signals to generate difference level signals corresponding to the sound collecting sections respectively; and
   a talker direction detection section that compares level values of the difference level signals to detect the maximum value among the level values, and detects a direction of the sound collecting section corresponding to the difference level signal indicating the maximum value as a talker direction.

2. The sound emitting and collecting apparatus according to claim 1, wherein the talker direction detection section presets a talker sound detection threshold value for the level value of the difference level signal; and
   wherein when the maximum value becomes larger than the talker sound detection threshold value, the talker direction detection section detects the direction of the sound collecting section corresponding to the difference level signal indicating the maximum value as the talker direction.

3. The sound emitting and collecting apparatus according to claim 1 or 2, wherein the difference level calculation section calculates the logarithm values of power of the collected sound signals and the average value of the logarithm values of power of the collected sound signals using only a low frequency component of the collected sound signal.

## FIG. 1

*FIG. 2*

# FIG. 3

(A)

SINGLE LEVEL

$W_i$

S

$W_{j(j \neq i)}$

TIME

I    II    III    IV

(B)

SIGNAL LEVEL OF
LOGARITHM VALUE

$P_i$

AV

$P_{j(j \neq i)}$

TIME

I    II    III    IV

(C)

SIGNAL LEVEL OF
LOGARITHM VALUE

$D_i$

Th

$D_{j(j \neq i)}$

TIME

I    II    III    IV

<div align="center">

**INTERNATIONAL SEARCH REPORT**

</div>

| | International application No. |
|---|---|
| | PCT/JP2008/067770 |

A.  CLASSIFICATION OF SUBJECT MATTER
*H04R3/00*(2006.01)i, *H04R1/40*(2006.01)i

According to International Patent Classification (IPC) or to both national classification and IPC

B.  FIELDS SEARCHED

Minimum documentation searched (classification system followed by classification symbols)
H04R3/00, H04R1/40

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 63-003589 A  (Nippon Telegraph And Telephone Corp.), 08 January, 1988 (08.01.88), Page 2, lower right column, line 8 to page 4, upper right column, line 4 (Family: none) | 1-3 |
| Y | JP 2003-087887 A  (Sony Corp.), 20 March, 2003 (20.03.03), Par. Nos. [0038] to [0089]; Figs. 5 to 12 & US 2003/0059061 A1    & US 2005/0207591 A1 & CN 1406066 A          & CN 1638532 A | 1-3 |
| Y | JP 10-293176 A  (NEC Corp.), 04 November, 1998 (04.11.98), Par. Nos. [0026] to [0033]; Fig. 7 (Family: none) | 1-3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search     25 November, 2008 (25.11.08) | Date of mailing of the international search report     09 December, 2008 (09.12.08) |
|---|---|
| Name and mailing address of the ISA/     Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/067770

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 05-056426 A  (Fujitsu Ltd.),<br>05 March, 1993 (05.03.93),<br>Par. Nos. [0007] to [0017]; Figs. 2 to 4<br>(Family: none) | 2 |
| Y | JP 09-163334 A  (Fujitsu Ltd.),<br>20 June, 1997 (20.06.97),<br>Par. Nos. [0009] to [0031]; Fig. 4<br>(Family: none) | 2 |
| Y | JP 2007-174155 A  (Yamaha Corp.),<br>05 July, 2007 (05.07.07),<br>Par. No. [0013]; Fig. 2<br>& US 2007/0160240 A1 | 3 |

Form PCT/ISA/210 (continuation of second sheet) (April 2007)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11018192 A
- JP 2007257419 A